# EUROPEAN PATENT SPECIFICATION

(11) **EP 2 916 210 B1**
(45) Date of publication and mention of the grant of the patent: **12.07.2017**
(21) Application number: 14157839.3
(22) Date of filing: 05.03.2014
(51) Int. Cl.: G06F 3/0487, G06F 3/01

(54) **Finger-worn device for providing user input**
An den Fingern getragenes Gerät zur Bereitstellung von Benutzereingaben
Dispositif installable sur le doigt permettant à un utilisateur d'introduire des données

(43) Date of publication of application: 09.09.2015
(73) Proprietor: Markantus AG, 8274 Tägerwilen (CH)
(72) Inventor: Hamm, Dirk, 8274 Tägerwilen (CH)
(74) Representative: Freischem & Partner Patentanwälte mbB

(56) References cited:
- WO-A1-2009/144363
- CA-A1- 2 773 900
- US-A1- 2006 119 578
- US-A1- 2010 013 758
- Tekscan: "02/24/06 I-Scan User Manual (Rev H) i FlexiForce Sensors User Manual", , 29 December 2010 (2010-12-29), XP055226770, Retrieved from the Internet: URL:https://www.tekscan.com/sites/default/ files/FLX-FlexiForce-Sensors-Manual.pdf [retrieved on 2015-11-09]

## Description

The invention relates to a finger operated control device that comprises a piezoelectric sensing means comprising a plurality of electrodes, a set of these devices and a method for controlling a computing device.

So far it has been difficult or expensive to control computing devices by capturing the movement of fingers. Some documents of the prior art teach the integration of complicated and expensive sensors into gloves.

CN 101751126 A describes a sensor worn on a finger.

US 20030214481 A1 also describes a sensor worn on a finger.

DE 4240531 C1 describes a glove for controlling a computer.

KR 1020000032308 A describes the generation of computer commands executed by the movement of a glove.

Dargahi et al. (Javad Dargahi, Siamak Najarian, (2004) "A supported membrane type sensor for medical tactile mapping", Sensor Review, Vol. 24 Iss: 3, pp.284 - 297) describe medical sensors using the piezoelectric effect.

Tekscan "02/24/06 I-Scan User Manual (Rev H)I FlexiForce Sensors User Manual" describes piezoelectric sensors.

US2006119578A1 discloses a system for interacting between an operator and a virtual object for computer aided design applications.

US2010013758A1 discloses a thimble shaped human interface device.

WO2009144363A1 discloses a flexural deformation sensing device and a user interface using the same.

CA2773900A1 discloses a hand-mountable device for providing user input.

The problem underlying the present invention is to provide simple means to capture complex movements of the fingers such as dragging the fingers over a surface.
1. The problem underlying the present invention is solved by a finger operated control device (1) able to cover at least 30% of the surface area of the skin around the distal phalanx of a finger (11), characterized in that it comprises a piezoelectric sensing means comprising a plurality of electrodes (23), where at least two electrodes (23) are separated by a material with piezoelectric properties, wherein
   a. the control device comprises an elastic polymer wall and the electrodes for each sensor are positioned opposite each other on both sides of the elastic polymer wall, and
   b. the device has the shape of a thimble and is made of polymer, and
   c. the electrodes on the surface of the polymer wall are covered by a protective layer, and
   d. the number of electrodes of the piezoelectric sensing means is at least 6, where at least 3 electrodes are opposite of at least other 3 electrodes and these at least 3 pairs of electrodes are separated by a material with piezoelectric properties, and
   e. the wall of the control device comprises the piezoelectric polymer thus forming a polymer wall of the control device.

This has the advantage that no external touch sensors are needed to operate a computing device. The fingertip may simultaneously be a sensor and pointing device.

Electrodes of the piezoelectric sensing means capture the pressure acting onto the sensing means. Also, with the materials available today, it is really inexpensive and easy to implement for example a whole array of electrodes of the piezoelectric sensing means. Due to a piezoelectric sensing means comprising a plurality of electrodes, dragging of a finger over a surface can be easily detected by monitoring the change of the electric potential of neighbouring electrodes of the piezoelectric sensing means.

The control device has the shape of a thimble and is made of polymer, where the thimble preferably comprises piezoelectric polymer, and where the thimble most preferably comprises polyvinylidene fluoride. The wall of the control device comprises the piezoelectric polymer thus forming a polymer wall of the control device. Preferably, the polymer is amorphous. Preferably, the polymer is present in the shape of a foil.

Preferably, the distance between at least two, preferably at least 50 %, of the electrodes of the piezoelectric sensing means is in a range between 0.1 to 5 mm, preferably in a range between 0.5 and 2 mm.

Preferably, the number of electrodes of the piezoelectric sensing means is in a range between 5 and 2000, preferably in a range between 20 and 200.

The number of electrodes of the piezoelectric sensing means is at least 6, where at least 3 electrodes are opposite of at least other 3 electrodes and these at least 3 pairs of electrodes are separated by a material with piezoelectric properties. This has the particular advantage that movements such as dragging of the finger can be sensed.

Ideally, the number of electrodes of the piezoelectric sensing means is at least 10, where at least 5 electrodes are opposite of the other at least 5 electrodes and these at least 5 pairs of electrodes are separated by a material with piezoelectric properties. This has the particular advantage that movements such as dragging of the finger can be sensed and error correction mechanisms can be implemented for more exact measurements.

Preferably, the control device is connected to a computing device, preferably connected to the computing device via a wireless or wired connection.

Preferably, at least 50% of the electrodes of the piezoelectric sensing means are positioned within 3 cm, preferably within 1.5 cm from the fingertip, more preferably positioned on the underside of the control device.

Preferably, the control device also comprises at least one gyroscope sensor.

Preferably, the control device also comprises at least one accelerometer.

Preferably, the control device also comprises at least one light sensor, preferably located on the underside of the control device.

Preferably, piezoelectric pressure sensors comprise piezoelectric polymer and at least two electrodes, wherein the electrodes are positioned on the underside of the control device. The control device comprises an elastic polymer wall. This polymer wall may be made of polyvinylidene fluoride. The electrodes for each sensor are positioned opposite each other on both sides of the elastic polymer wall. The electrodes each may have a width in a range from 0.05 to 1 mm. The electrodes each may have a length in a range from 0.05 to 1 mm. The electrodes each may have a thickness in a range from 0.005 to 0.5 mm. The electrodes may be made of conductive polymer or metal. The metal may be chosen from the group consisting of titanium, gold, silver, platinum and copper.

Each electrode may be connected to a wire. This wire may have a thickness in a range from 0.01 to 0.5 mm. The wire may be made of conductive polymer or metal. The metal may be chosen from the group consisting of titanium, gold, silver, platinum and copper.

On the other side of the wires, the wires may be connected to the computing device, a wireless transmitter or switching device. At least part of the wires may be bundled and optionally insulated. They may also be bundled using a heat shrink tube. Preferably, the bundled wires may be surrounded by a magnetic shielding means such as a copper net.

The elastic polymer wall may have a thickness in a range from 0.1 to 2 mm, preferably in a range from 0.5 to 1.5 mm.

The electrodes on the surface of the polymer wall are covered by a protective layer. This protective layer may be made of polymeric material. The protective layer may be present on the outer side of the control device to avoid abrasion of the electrodes by movement of the fingers over surfaces. The protective layer may be present on the inner side of the control device to prevent corrosion of the electrodes by aggressive liquids like sweat. The inner protective layer and the outer protective layer may be made of the same or different materials. The material of the protective layers may be independently selected from the group consisting of nitrile rubber, latex, polyethylene, polypropylene or mixtures thereof.

The protective layer may also have eletromagnetic shielding capability. Preferaby, the control device may comprise a net or grid made of metal. This has the particular advantage that the magnetic field stemming from e.g. an electromagnetic coil will not influence the measurements of the piezoelectric sensing means.

The protective layer may comprise several sublayers with different functionality. Preferably, at least one sublayer is a protective layer against mechanical stress. Preferably, at least one sublayer is a protective layer against electromagnetic radiation. Preferably, at least one sublayer is an electrical insulating sublayer.

In another embodiment of the invention, the problem according to the present invention is solved by a set of at least two control devices according to the present invention, characterized in that each of at least two control devices comprises at least one distance sensor to measure the distance to the other or any further control device according to the present invention.

Preferably, the distance sensor is an electromagnetic coil, preferably positioned at the edge of the control device that is located opposite the fingertip.

Preferably, the set is adapted to be worn on the thumb and the index finger of one hand.

In another embodiment of the invention, the problem according to the present invention is solved by a method for operating a computing device, characterized in that the signals from the electrodes of the piezoelectric sensing means of the control device according to the present invention or the set of devices according to the present invention are translated into a relative or absolute movement within the user interface of the computing device, preferably where the computing device is selected from the group comprising watches, computer operated glasses or eye-tracking computing devices.

Preferably, the change in distance between the control devices is translated into a zoom effect within the user interface of the computing device.

Embodiments of the system described herein will now be explained in more detail with reference to the figures of the drawings, which are briefly explained as follows. Please note that this explanation shall not limit the scope of the present invention and should be seen as an example of the present invention only.

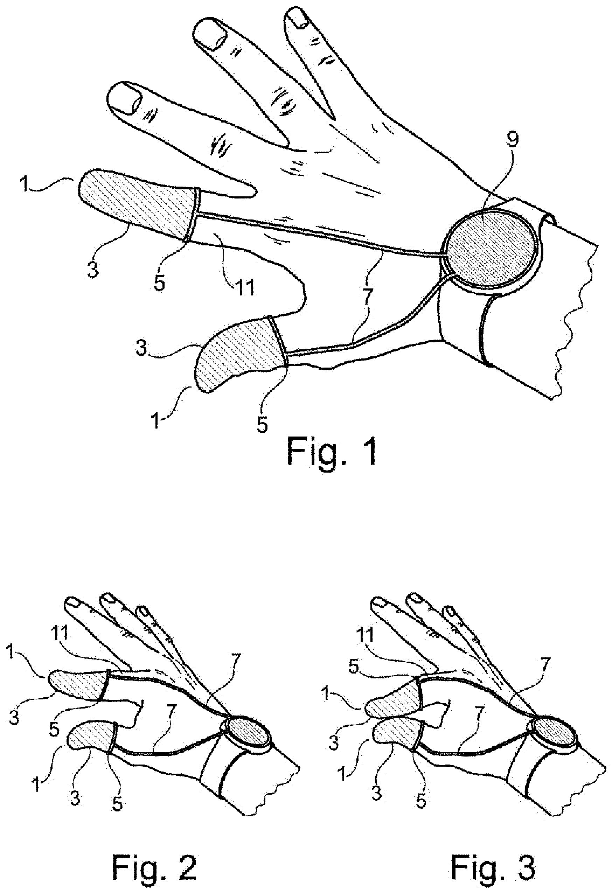

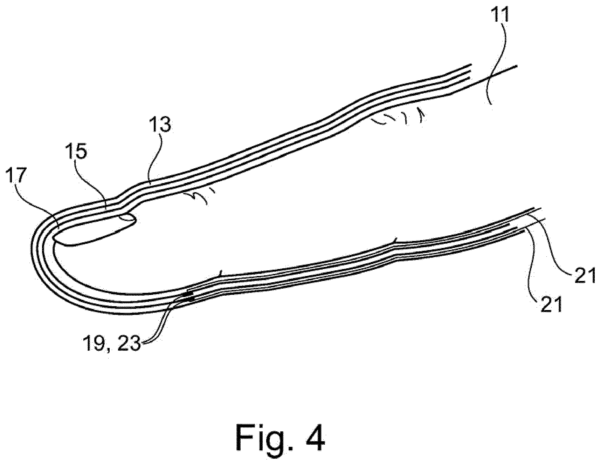

Fig. 1 shows a hand of a user who wears the control device on the thumb and the index finger.
Fig. 2 shows the thumb and index finger spaced apart, where both fingers wear the control device.
Fig. 3 shows the thumb and index finger touching each other, where both fingers wear the control device.

The control device 1 can comprise a thimble 3 comprising a 1 mm thick polymer wall made of amorphous polyvinylidene fluoride 15. On this layer of the polymer wall, square gold electrodes 19 measuring 1 mm x 1 mm and having a thickness of 0.1 mm can be positioned and wires 21 lead away from the electrodes. The electrodes are positioned opposite each other on both sides of the polymer wall thus forming a piezoelectric sensor 23. Thirty of these sensors are formed on the underside of the thimble 3 made of amorphous polyvinylidene fluoride.

The polymer wall can be enclosed between an inner protective layer 17 and an outer protective layer 13, both made of nitrile rubber. The gold electrodes 19 are soldered to gold wires 21 with a diameter of 0.1 mm each.

The wires 21 coming out of the control device are insulated and bundled in a heat shrink tube 7 and then connected to a computing device in the form of a watch 9. The heat shrink tube comprises electromagnetic shielding means in form of a copper net. Inside the watch 9, the wires 21 are connected to piezoelectric transducers to convert the potential measured by the electrodes 19 into signals that can be processed by the computing device 9.

Based on the change in potential of neighbouring electrodes of the piezoelectric sensing means 23, the computing device 9 can determine whether the finger 11 is just tipped onto a surface or dragged over a surface.

Also, the control device 1 comprises an electromagnetic coil 5 in a ringshaped housing situated at the end of the polymeric thimble 3 arranged around the finger 11. This electromagnetic coil 5 is covered by the inner and/or the outer protective layer (13, 17) and is connected by wires 21 to the computing device 9 in the same manner as the electrodes of the piezoelectric sensing means 23.

Measuring the signals emitted by the electromagnetic coils 5, information about the distance between different fingers 11 may be obtained.

The ring housing the electromagnetic coils 5 may also house a gyroscope sensor and an accelerometer. These sensors are connected to the computing device 9 in the same way as described above for the electrodes of the piezoelectric sensing means. They can give more accurate information about the movement and position of the fingers 11.

The features disclosed in the present description, drawings and claims may be significant for the invention each by itself or in any reasonable combination.

## Claims

1. Finger operated control device (1) able to cover at least 30% of the surface area of the skin around the distal phalanx of a finger (11), **characterized in that** it comprises a piezoelectric sensing means comprising a plurality of electrodes (23), where at least two electrodes (23) are separated by a material with piezoelectric properties, wherein
a. the control device comprises an elastic polymer wall and the electrodes for each sensor are positioned opposite each other on both sides of the elastic polymer wall, and
b. the device has the shape of a thimble and is made of polymer, and
c. the electrodes on the surface of the polymer wall are covered by a protective layer, and
d. the number of electrodes of the piezoelectric sensing means is at least 6, where at least 3 electrodes are opposite to at least other 3 electrodes and these at least 3 pairs of electrodes are separated by a material with piezoelectric properties, and
e. the wall of the control device comprises the piezoelectric polymer thus forming a polymer wall of the control device.

2. Control device according to claim 1, **characterized in that** the thimble comprises piezoelectric polymer (15).

3. Control device according to claim 1 or 2, **characterized in that** the distance between at least two of the electrodes of the piezoelectric sensing means (23) is in a range between 0.1 to 5 mm.

4. Control device according to any one of claims 1 to 3, **characterized in that** the number of electrodes of the piezoelectric sensing means (23) is in a range between 5 and 2000.

5. Control device according to any one of claims 1 to 4, **characterized in that** it is connected to a computing device (9).

6. Control device according to any one of claims 1 to 5, **characterized in that** at least 50% of the electrodes of the piezoelectric sensing means (23) are positioned within 3 cm from the fingertip.

7. Control device according to any one of claims 1 to 6, **characterized in that** the control device (1) also comprises at least one gyroscope sensor.

8. Control device according to any one of claims 1 to 7, **characterized in that** the control device (1) also comprises at least one accelerometer.

9. Control device according to any one of claims 1 to 8, **characterized in that** the control device (1) also comprises at least one light sensor.

10. Control device according to any one of claims 1 to 9, **characterized in that** the electrodes of the piezoelectric sensing means (23) are separated by piezoelectric polymer, wherein said electrodes (19) are positioned on the underside of the control device.

11. Set of at least two control devices according to claims 1 to 10, **characterized in that** each of at least two control devices (1) comprises at least one distance sensor (5) to measure the distance to the other or any further control device according to claims 1 to 10.

12. Set according to claim 11, **characterized in that** the distance sensor (5) is an electromagnetic coil.

13. Set according to claim 11 or 12, **characterized in that** the set is adapted to be worn on the thumb and the index finger of one hand.

14. Method for operating a computing device, **characterized in that** the signals from the electrodes of the piezoelectric sensing means (23) of the control device (1) according to claims 1 to 10 or the set of control devices (1) according to claims 11 to 13 are translated into a relative or absolute movement within the user interface of the computing device (9).

15. Method according to claim 14 when depending on any one of claims 11 to 13, **characterized in that** the change in distance between the control devices (1) is translated into a zoom effect within the user interface of the computing device (9).

## Patentansprüche

1. Fingerbetätigte Steuervorrichtung (1), die dazu fähig ist, wenigstens 30 % der Hautoberfläche um die distale Phalanx eines Fingers (11) abzudecken, **dadurch gekennzeichnet, dass** sie ein piezoelektrisches Sensormittel umfasst, das eine Mehrzahl von Elektroden (23) umfasst, wobei wenigstens zwei Elektroden (23) durch ein Material mit piezoelektrischen Eigenschaften getrennt sind, wobei
a. Die Steuervorrichtung eine elastische Polymerwand umfasst und die Elektroden für jeden Sensor auf beiden Seiten der elastischen Polymerwand einander gegenüberliegend angeordnet sind und
b. die Vorrichtung die Form eines Fingerlings hat und aus Polymer besteht und
c. die Elektroden auf der Oberfläche der Polymerwand von einer Schutzschicht bedeckt sind und
d. die Zahl der Elektroden auf dem piezoelektrischen Sensorelement wenigstens 6 beträgt, wobei wenigstens 3 Elektroden wenigstens 3 anderen Elektroden gegenüberliegen und diese wenigstens 3 Paare von Elektroden durch ein Material mit piezoelektrischen Eigenschaften getrennt sind, und
e. die Wand der Steuervorrichtung das piezoelektrische Polymer umfasst, wodurch eine Polymerwand der Steuervorrichtung gebildet wird.

2. Steuervorrichtung nach Anspruch 1, **dadurch gekennzeichnet, dass** der Fingerhut ein piezoelektrisches Polymer (15) umfasst.

3. Steuervorrichtung nach Anspruch 1 oder 2, **dadurch gekennzeichnet, dass** der Abstand zwischen wenigstens zwei der Elektroden des piezoelektrischen Sensormittels (23) in einem Bereich zwischen 0,1 und 5 mm liegt.

4. Steuervorrichtung nach einem der Ansprüche 1 bis 3, **dadurch gekennzeichnet, dass** die Zahl der Elektroden des piezoelektrischen Sensormittels (23) in einem Bereich zwischen 5 und 2000 liegt.

5. Steuervorrichtung nach einem der Ansprüche 1 bis 4, **dadurch gekennzeichnet, dass** sie an eine Rechenvorrichtung (9) angeschlossen ist.

6. Steuervorrichtung nach einem der Ansprüche 1 bis 5, **dadurch gekennzeichnet, dass** wenigstens 50 % der Elektroden des piezoelektrischen Sensormittels (23) innerhalb von 3 cm von der Fingerspitze angeordnet sind.

7. Steuervorrichtung nach einem der Ansprüche 1 bis 6, **dadurch gekennzeichnet, dass** die Steuervorrichtung (1) auch wenigstens einen Gyroskopsensor umfasst.

8. Steuervorrichtung nach einem der Ansprüche 1 bis 7, **dadurch gekennzeichnet, dass** die Steuervorrichtung (1) auch wenigstens einen Beschleunigungsmesser umfasst.

9. Steuervorrichtung nach einem der Ansprüche 1 bis 8, **dadurch gekennzeichnet, dass** die Steuervorrichtung (1) auch wenigstens einen Lichtsensor umfasst.

10. Steuervorrichtung nach einem der Ansprüche 1 bis 9, **dadurch gekennzeichnet, dass** die Elektroden des piezoelektrischen Sensormittels (23) durch ein piezoelektrisches Polymer getrennt sind, wobei die Elektroden (19) auf der Unterseite der Steuervorrichtung angeordnet sind.

11. Satz von wenigstens zwei Steuervorrichtungen nach den Ansprüchen 1 bis 10, **dadurch gekennzeichnet, dass** jede der wenigstens zwei Steuervorrichtungen (1) wenigstens einen Abstandssensor (5) zur Messung des Abstands zur anderen oder zu einer beliebigen weiteren Steuervorrichtung gemäß den Ansprüchen 1 bis 10 umfasst.

12. Satz nach Anspruch 11, **dadurch gekennzeichnet, dass** der Abstandssensor (5) eine elektromagnetische Spule ist.

13. Satz nach Anspruch 11 oder 12, **dadurch gekennzeichnet, dass** der Satz so angepasst ist, dass er auf dem Daumen und dem Zeigefinger einer Hand zu tragen ist.

14. Verfahren zur Betätigung einer Rechenvorrichtung, **dadurch gekennzeichnet, dass** die Signale von den Elektroden des piezoelektrischen Sensormittels (23) der Steuervorrichtung (1) nach den Ansprüchen 1 bis 10 oder dem Satz von Steuervorrichtungen (1) gemäß den Ansprüchen 11 bis 13 innerhalb der Benutzerschnittstelle der Rechenvorrichtung (9) in eine relative oder absolute Bewegung umgewandelt werden.

15. Verfahren nach Anspruch 14, das, wenn es von einem der Ansprüche 11 bis 13 abhängt, **dadurch gekennzeichnet, dass** eine Änderung des Abstands zwischen den Steuervorrichtungen (1) innerhalb der Benutzerschnittstelle der Rechenvorrichtung (9) in einen Zoomeffekt umgewandelt wird.

## Revendications

1. Dispositif de commande actionné par des doigts (1) capable de couvrir au moins 30 % de la surface de la peau autour de la phalange distale d'un doigt (11), **caractérisé en ce qu'**il comprend un moyen de détection piézoélectrique comprenant une pluralité d'électrodes (23), où au moins deux électrodes (23) sont séparées par un matériau ayant des propriétés piézoélectriques, dans lequel
a. le dispositif de commande comprend une paroi de polymère élastique et les électrodes pour chaque capteur sont positionnées mutuellement opposées des deux côtés de la paroi de polymère élastique, et
b. le dispositif a la forme d'un dé à coudre et est en polymère, et
c. les électrodes à la surface de la paroi de polymère sont recouvertes d'une couche protectrice, et
d. le nombre d'électrodes du moyen de détection piézoélectrique est d'au moins 6, où au moins 3 électrodes sont opposées à au moins 3 autres électrodes, et ces au moins 3 paires d'électrodes sont séparées par un matériau ayant des propriétés piézoélectriques, et
e. la paroi du dispositif de commande comprend le polymère piézoélectrique, en formant ainsi une paroi de polymère du dispositif de commande.

2. Dispositif de commande selon la revendication 1, **caractérisé en ce que** le dé à coudre comprend un polymère piézoélectrique (15).

3. Dispositif de commande selon la revendication 1 ou 2, **caractérisé en ce que** la distance entre au moins deux des électrodes du moyen de détection piézoélectrique (23) est dans une plage entre 0,1 et 5 mm.

4. Dispositif de commande selon l'une quelconque des revendications 1 à 3, **caractérisé en ce que** le nombre d'électrodes du moyen de détection piézoélectrique (23) est dans une plage entre 5 et 2 000.

5. Dispositif de commande selon l'une quelconque des revendications 1 à 4, **caractérisé en ce qu'**il est connecté à un dispositif informatique (9).

6. Dispositif de commande selon l'une quelconque des revendications 1 à 5, **caractérisé en ce qu'**au moins 50 % des électrodes du moyen de détection piézoélectrique (23) sont positionnées à moins de 3 cm du bout du doigt.

7. Dispositif de commande selon l'une quelconque des revendications 1 à 6, **caractérisé en ce que** le dispositif de commande (1) comprend également au moins un capteur gyroscopique.

8. Dispositif de commande selon l'une quelconque des revendications 1 à 7, **caractérisé en ce que** le dispositif de commande (1) comprend également au moins un accéléromètre.

9. Dispositif de commande selon l'une quelconque des revendications 1 à 8, **caractérisé en ce que** le dispositif de commande (1) comprend également au moins un capteur de lumière.

10. Dispositif de commande selon l'une quelconque des revendications 1 à 9, **caractérisé en ce que** les électrodes du moyen de détection piézoélectrique (23) sont séparées par un polymère piézoélectrique, dans lequel lesdites électrodes (19) sont positionnées sur le dessous du dispositif de commande.

11. Ensemble d'au moins deux dispositifs de commande selon les revendications 1 à 10, **caractérisé en ce que** chacun d'au moins deux dispositifs de commande (1) comprend au moins un capteur de distance (5) pour mesurer la distance par rapport à l'autre ou à tout autre dispositif de commande selon les revendications 1 à 10.

12. Ensemble selon la revendication 11, **caractérisé en ce que** le capteur de distance (5) est une bobine électromagnétique.

13. Ensemble selon la revendication 11 ou 12, **caractérisé en ce que** l'ensemble est adapté pour être porté sur le pouce et l'index d'une main.

14. Procédé pour faire fonctionner un dispositif informatique, **caractérisé en ce que** les signaux provenant des électrodes du moyen de détection piézoélectrique (23) du dispositif de commande (1) selon les revendications 1 à 10 ou l'ensemble de dispositifs de commande (1) selon les revendications 11 à 13 sont traduits en un mouvement relatif ou absolu dans l'interface utilisateur du dispositif informatique (9).

15. Procédé selon la revendication 14, selon l'une quelconque des revendications 11 à 13, **caractérisé en ce que** le changement de distance entre les dispositifs de commande (1) est traduit en un effet de zoom dans l'interface utilisateur du dispositif informatique (9).
